# EUROPÄISCHE PATENTSCHRIFT

(11) **EP 1 096 419 B1**
(45) Veröffentlichungstag und Bekanntmachung des Hinweises auf die Patenterteilung: **19.02.2014**
(21) Anmeldenummer: 00121987.2
(22) Anmeldetag: 10.10.2000
(51) Int. Cl.: G06F 3/033

(54) **Eingabegerät**
Input device
Dispositif d' entrée

(30) Priorität: 29.10.1999 DE 19952087
(43) Veröffentlichungstag der Anmeldung: 02.05.2001
(73) Patentinhaber: IPCom GmbH & Co. KG, 82049 Pullach (DE)
(72) Erfinder: Hasemann, Joerg-Michael, 27321 Thedinghausen (DE)
(74) Vertreter: Gigerich, Jan

(56) Entgegenhaltungen:
- EP-A2- 0 817 393
- WO-A-96/35288
- DE-A- 2 239 594
- DE-A- 4 209 668
- GB-A- 2 219 911
- GB-A- 2 276 703
- US-A- 4 876 524
- "TELESCOPIC JOYSTICK" IBM TECHNICAL DISCLOSURE BULLETIN, IBM CORP. NEW YORK, US, Bd. 31, Nr. 11, 1. April 1989 (1989-04-01), Seiten 288-289, XP000052233 ISSN: 0018-8689

## Beschreibung

Die Erfindung betrifft ein Eingabegerät zum Steuern und/oder Auswählen von Objekten auf einer Anzeigeeinheit mit mindestens einem Biegungssensor.

Eingabegeräte dienen zum Bewegen, Steuern und Auswählen von Objekten, wie zum Beispiel eines Cursors oder Schaltknöpfen (Icons), auf der Anzeigeeinheit eines elektronischen Gerätes, z. B. eines Computers oder zur Eingabe von Befehlen verwendet. Zur Eingabe von Zeichenketten und zur Steuerung des Cursors mittels Cursortasten sind Tastaturen hinreichend bekannt. Weiterhin ist die sogenannte Maus weit verbreitet, bei der eine Kugel über eine Oberfläche bewegt wird. Die Position eines Cursors wird aus der Bewegungsrichtung und Bewegungsgeschwindigkeit der Kugel ermittelt. Bei dem sogenannten Trackball wird eine Kugel mit der Hand bewegt und nicht wie bei einer Maus über eine Oberfläche verfahren. Als weitere Eingabegeräte sind Lichtgriffel zur optischen Auswertung der Position des Lichtgriffels auf einer Anzeigeneinheit und sogenannte Joysticks zur Steuerung durch Messung des Kippwinkels eines Hebels bekannt.

Zur Digitalisierung dreidimensionaler Bewegungen sind dreidimensionale Zeigegeräte wie zum Beispiel Steuerkugeln und Steuerhandschuhe hinreichend bekannt. Mit solchen dreidimensionalen Zeigegeräten kann ein Cursor in einem perspektivisch auf der Anzeigeeinheit dargestellten Raum bewegt werden. In den Steuerhandschuhen werden zum Beispiel Biegungssensoren eingesetzt, die parallel zu den Fingern eines Benutzers verlaufen und deren Biegeradius durch das Anwinkeln des jeweiligen Fingers verändert wird. Die Biegungssensoren sind zum Beispiel als veränderliche Widerstände realisiert, die abhängig von der auf den Biegesensor aufgeübten Biegung Ihren Widerstand ändern. Solche Biegungssensoren finden auch in der Robotertechnik zur Kollisionserkennung Verwendung.

Eine andere Ausprägung von Biegungssensoren sind Dehnungsmessstreifen (engl. straingauges), die Kraftmessung u. a. in der Robotik Verwendung finden.

Aus der WO 96/35288 ist ein tragbares Kommunikationsgerät mit integrierter Kamera und Bildanzeigevorrichtung bekannt. Dort werden verschiedenste Komponenten, wie Sprachein- und Ausgabe, Bildanzeige sowie Rechner in einem Gerät vereinigt. Zur Bilddarstellung werden mehrere Lösungen gezeigt. Darüber hinaus kann;der Rechner aus dem Gerät herausgenommen werden und mittels Infrarottechnik mit dem Grundgerät kommunizieren. Weiter kann eine Breitband-Übertragungsstrecke vorgesehen sein, wobei vom Telefonnetz unabhängige Funkwellen mit vorzugsweise vorgesehenen Rechenservern Kontakt herstellen.

Aus der Druckschrift US 4 876 524 ist eine Steuervorrichtung nach der Art eines Joysticks bekannt, bei der Kräfte, die auf die Vorrichtung ausgeübt werden, messbar sind. Dazu werden Dehnungsmessstreifen (strain gauges) zur Erfassung der Auslenkungskräfte an dem Joystick angebracht.

Aus der Druckschrift EP 0 817 393 A2 ist eine tragbare Energiequelle mit eigenem Display bekannt, die an vorhandene Mobiltelefone koppelbar ist Dieses Display ist derart angeordnet, dass es - im Operationsmode des Mobiltelefon - in der Sichtlinie des Nutzers liegt. Die tragbare Energiequelle versorgt das Mobiltelefon mit zusätzlicher Energie und dem einsehbaren Display, wobei das Display nach Benutzerpräferenzen individuell einstellbar ist.

Aufgabe der Erfindung war es, ein insbesondere für mobile Endgeräte einsetzbares kostengünstiges und leicht zu bedienendes Eingabegerät zu schaffen.

Die Aufgabe wird durch das Eingabegerät nach Anspruch 1 gelöst, indem ein Biegungssensor mit der Längskante eines flexiblen Drahtes verbunden ist.

In diesem Fall wird nur eindimensional gemessen, also nur "hoch" oder "runter". Ein solches längliches Eingabegerät kann an das mobile Endgerät befestigt und leicht bedient werden. Dadurch, dass durch den flexiblen Draht eine Vorzugsbiegerichtung vorgegeben ist, ist eine Bewegungsrichtung definiert. Die Verschiebung zum Beispiel eines Cursors in diese Bewegungsrichtung wird durch den Biegeradius bzw. den durch den Biegeradius veränderten Widerstand des Biegungssensors bestimmt.

Vorteilhafterweise sind zwei Biegungssensoren rechtwinklig zueinander mit den Längskanten des flexiblen Drahtes verbunden und erstrecken sich parallel zueinander entlang ihrer Längsachse. Hierbei sollte der flexible Draht rechteckig sein, wodurch sich die Biegungssensoren besser am Draht befestigen lassen. Durch den ersten Biegungssensor würde auf diese Weise die X-Achse und durch den zweiten Biegungssensor die Y-Achse festgelegt werden. Die Positionsbestimmung erfolgt bei dieser Ausführungsform im kartesischen Koordinatensystem.

Alternativ hierzu kann der flexible Draht an einem Ende drehbar angebracht sein, wobei ein Sensor zur Bestimmung des Drehwinkels des flexiblen Drahtes vorgesehen ist. Die Verschiebung eines Cursors wird bei dieser Ausführungsform im Polarkoordinatensystem bestimmt. Die Entfernung des Cursors von dem Mittelpunkt ist hierbei proportional zur Durchbiegung des Biegungssensors. Der Koordinatenwinkel wird aus dem Drehwinkel des flexiblen Drahts bestimmt.

Der Sensor zur Bestimmung des Drehwinkels kann ein Drehgeber, ein Impulsgeber, ein Codierungsrad oder ähnliches sein.

Es ist vorteilhaft, wenn der flexible Draht ein Federdraht ist, so daß dieser selbständig in eine Nullposition zurückschwingen kann.

Weiterhin ist es vorteilhaft, wenn mindestens eine Auswahltaste an dem freien Ende des flexiblen Drahtes angebracht ist. Mit dieser Auswahltaste können Steuersignale zum Beispiel zum Aktivieren eines Kommandos, das mit einem ausgewählten Objekt verknüpft ist, ausgelöst werden.

Ein oder mehrere Schleifringe können verwendet werden, um eventuell vorhandene Tasten zu kontaktieren, für den Fall, daß eine Lösung nach Anspruch 3 Verwendung findet.

Vorzugsweise ist die Anzeigeeinheit ein virtuelles Retina-Display, das in ein mobiles Endgerät, wie zum Beispiel ein Mobiltelefon, eingebaut ist. Bei der Verwendung eines Mobiltelefons ist es während des Telefonierens nämlich nur schwer möglich, an dem Mobiltelefon angebrachte Eingabegeräte zu bedienen. Durch das längliche Eingabegerät wird der Angriffspunkt soweit von dem Mobiltelefon weggelegt, daß das Eingabegerät leicht und bequem zu bedienen ist.

Die Erfindung wird nachfolgend anhand der beigefügten Zeichnungen näher erläutert. Es zeigen:
- Fig. 1: - Eingabegerät mit einem Biegungssensor an der Längskante eines flexiblen Drahtes in Verbindung mit einem mobilen Endgerät;
- Fig. 2: - zwei rechtwinklig zueinander angeordnete Biegungssensoren an der Längskante eines flexiblen Drahtes als Seitenansicht und Draufsicht;
- Fig. 3: - Skizze zur Ermittlung der Cursorposition auf einer Anzeigeeinheit durch Messung der Biegungen des Biegungssensors in kartesischer Koordinatenrichtung;
- Fig. 4: - drehbar angeordnetes Eingabegerät in der Seitenansicht und als Draufsicht;
- Fig. 5: - Skizze zur Ermittlung der Cursorposition auf einer Anzeigeneinheit durch Messen der Biegung des Biegungssensors und des Drehwinkels des Eingabegerätes;
- Fig. 6: - Beispiel zur Benutzung des Eingabegerätes in Verbindung mit einem Mobiltelefon.

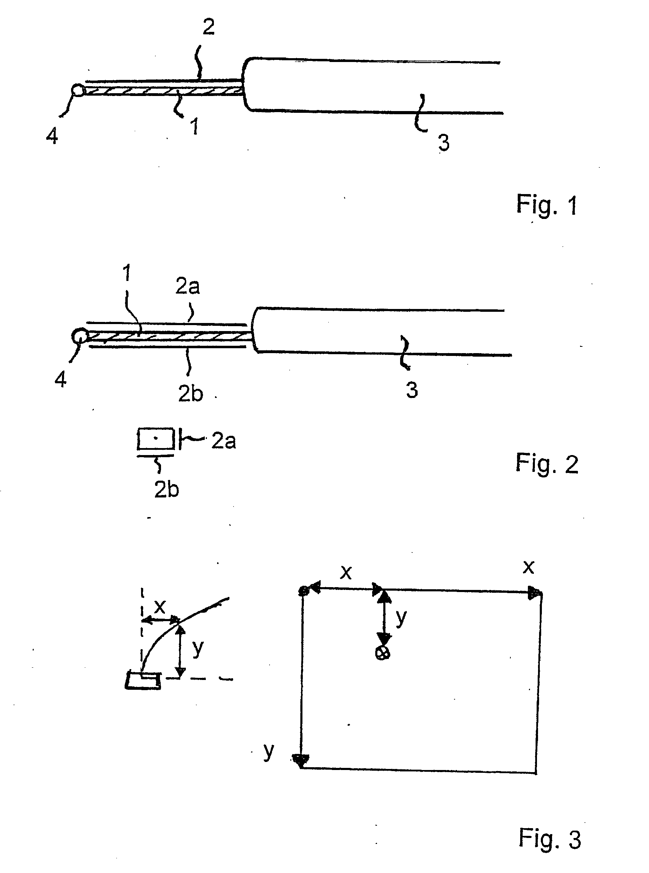

Die Fig. 1 läßt eine Ausführungsform des erfindungsgemäßen Eingabegerätes mit flexiblen Draht 1 und einem Biegungssensor 2 erkennen, der mit der Längskante des flexiblen Drahtes 1 verbunden ist und sich parallel zu dem flexiblen Draht 1 erstreckt. Das eine Ende des Biegungssensors 2 bzw. des flexiblen Drahtes 1 ist fest an ein mobiles Endgerät 3 angebracht. Als flexibler Draht 1 kann zum Beispiel ein Federdraht oder ähnliches verwendet werden. Der Federdraht sollte rechteckig sein und eine Vorzugsbiegerichtung um die Längskante haben, an der der Biegungssensor 2 befestigt ist. Die Steuerung und/oder das Auswählen von Objekten wie zum Beispiel von Schaltsymbolen und Icons auf eine Anzeigeeinheit erfolgt in Abhängigkeit von dem Biegungsradius des Biegungssensors 2. An dem anderen Ende des Federdrahtes ist eine Auswahltaste 4 vorgesehen, um entsprechend der bekannten Maustasten von Personalcomputern Aktionen auszulösen. Nachdem zum Beispiel ein Cursor mit Hilfe des Eingabegerätes auf ein auswählbares Objekt gefahren wurde, kann das Objekt mit Hilfe der Auswahltaste 4 ausgewählt und eine mit dem Objekt verknüpfte Anwendung gestartet werden.

Die Fig. 2 läßt ein bevorzugtes Ausführungsbespiel erkennen, bei dem zwei Vorzugsbiegerichtungen (X- und Y-Richtung) vorgesehen sind, in die das Eingabegerät bewegt werden kann. Hierzu sind zwei Biegungssensoren 2a und 2b im rechten Winkel zueinander an die Längskanten des flexiblen Drahts 1 angebracht. Das freie Ende des flexiblen Drahtes 1 bzw. der Biegungssensoren 2a und 2b sind fest mit dem mobilen Endgerät 3 verbunden. Eine durch Biegung des Biegungssensors 2a in X-Richtung entspricht einer Bewegung des Cursors auf der Anzeigeeinheit ebenfalls in X-Richtung. Entsprechend erfolgt die Bewegung des Cursors in Y-Richtung proportional zu der Durchbiegung des zweiten Biegungssensors 2b. In der Ruheposition, wenn der flexible Draht 1 nicht durchgebogen ist, befindet sich der Cursor auf der Anzeigeeinheit in einer Ausgangsposition.

In Verbindung mit der Fig. 3 wird deutlich, daß die Cursorposition mit dem in der Fig. 2 dargestellten Eingabegerät mit Hilfe von kartesischen Koordinaten erfolgt, indem die Auslenkung in X- und Y-Richtung relativ zu der Ruheposition gemessen und die Cursorposition relativ hierzu bestimmt wird.

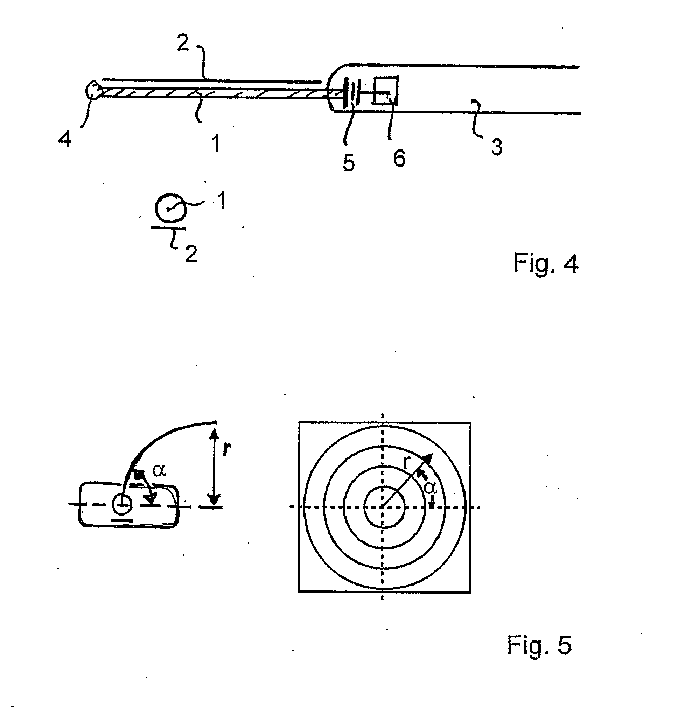

Die Fig. 4 läßt eine andere Ausführungsform des Eingabegerätes erkennen, bei dem der flexible Draht 2 drehbar an dem mobilen Endgerät befestigt ist. Aus der Draufsicht ist erkennbar, daß ein einzelner Biegungssensor 2 vorgesehen ist, der wie bereits beschrieben an der Längskante des flexiblen Drahtes 1 angebracht ist. Die Messung des Drehwinkels des flexiblen Drahtes 1 in Bezug auf das mobile Endgerät 3 erfolgt mit einem absoluten und inkrementellen Drehgeber 6. Vorzugsweise sollte eine Nullstellenindikation zur Festlegung eines Ausgangswinkels vorhanden sein. Die Messung des Drehwinkels kann aber auch mit einem Impulsgeber und/oder einem Codierungsrad erfolgen. Die Kontaktierung der Auswahltaste(n) erfolgt über einen oder mehrere Schleifring(e) 5.

Aus der Fig. 5 wird deutlich, daß die Cursorposition bei dem in der Fig. 4 gezeigten Eingabegerät mit Hilfe des Polarkoordinatensystems ermittelt wird. Die Richtung wird durch den Winkel bestimmt, der durch den Drehgeber 6 gemessen wird. Die Vektorlänge hingegen wird durch den Biegungsradius des Biegesensors 2 ermittelt.

Der Biegeradius wird vorzugsweise mit einem Biegungssensor 2 gemessen, der aus veränderlichen Widerständen besteht, die abhängig von der auf den Biegungssensor 2 ausgeübten Biegung ihren Widerstand ändern.

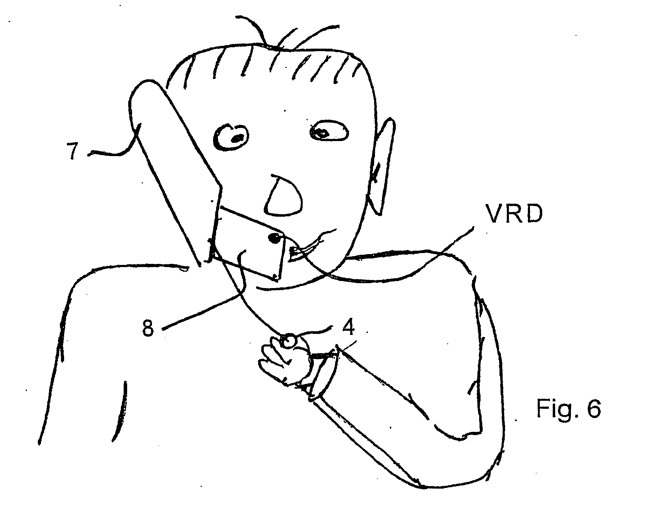

Das Eingabegerät kann, wie in der Fig. 6 skizziert ist, insbesondere in Verbindung mit einem Mobiltelefon 7 eingesetzt werden, in dessen Tastaturabdeckklappe 8 ein Virtuelles Retina-Display VRD angeordnet ist. Virtuelle Retina-Displays VRD sind sehr kompakte Miniaturdisplaylösungen, bei denen Bilder direkt in die Retina des Nutzers projiziert werden. Ein Display im herkömmlichen Sinne ist nicht vorhanden und es wird kein reales Bild erzeugt.

Aus der Fig. 6 ist weiterhin erkennbar, daß die Gebrauchshaltung bei der Benutzung von Mobiltelefonen 7 so ungünstig ist, daß keine genau kontrollierten feinmotorischen Bewegungen möglich sind und herkömmliche Eingabegeräte somit nicht eingesetzt werden können. Herkömmliche Eingabegeräte benötigen daher eine größere Mechanik, um größere Auslenkungen aufgrund der gröberen Bewegungsabläufe zu ermöglichen. Dies erfordert jedoch zuviel Gewicht und Platz. Dieser Nachteil kann durch das an das Mobiltelefon 7 angebrachte Eingabegeräte behoben werden. Hierzu weist das Eingabegerät aufgrund seiner länglichen Ausführungsform vom Mobiltelefon 7 weg, so daß der Nutzer das Ende des Eingabegerätes greifen und eine Auslenkung z. B. eines Cursors steuern kann. Hierbei sind die Augen des Nutzers auf das Virtuelle Retina-Display VRD gerichtet, so daß eine Darstellung mit auswählbaren Objekten auf seine Retina projiziert wird. Mit Hilfe des Eingabegerätes kann der Nutzer durch Drehen und Verbiegen des Biegungssensors 2 bzw. des flexiblen Drahtes 1 einen auf seine Retina projizierten Cursor steuern und entsprechende Kommandos veranlassen.

Der flexible Draht 1 kann auch gleichzeitig als Antenne ausgebildet sein und das dargestellte Eingabegerät kann z. B. teleskopartig in das mobile Endgerät 3 eingeschoben werden.

## Patentansprüche

1. Mobiles Endgerät (7) mit einem Eingabegerät und einer Anzeigeeinheit, wobei das Eingabegerät zum Steuern und/oder Auswählen von Objekten auf der Anzeigeeinheit ausgebildet ist, wobei die Anzeigeeinheit als virtuelles Retina-Display ausgeführt ist,
**dadurch gekennzeichnet, dass**
das Eingabegerät einen Draht (1) und einen Biegungssensor (2) aufweist, wobei der Biegungssensor (2) mit der Längskante des flexiblen Drahtes (1) verbunden ist,
dass das Eingabegerät länglich ausgeführt ist und vom mobilen Endgerät (7) wegführt und dass der flexible Draht (1) rechteckig ist und eine Vorzugsbiegerichtung hat.

2. Mobiles Endgerät (7) mit einem Eingabegerät nach Anspruch 1, **dadurch gekennzeichnet, dass** zwei Biegungssensoren (2a, 2b) rechtwinklig zueinander mit Längskanten des flexiblen Drahtes (1) verbunden sind und sich entlang ihrer Längsachse parallel zueinander erstrecken.

3. Mobiles Endgerät (7) mit einem Eingabegerät nach einem der vorhergehenden Ansprüche, **dadurch gekennzeichnet, dass** der flexible Draht (1) an einem Ende drehbar angebracht ist und ein Sensor zur Bestimmung des Drehwinkels des flexiblen Drahtes (1) vorgesehen ist.

4. Mobiles Endgerät (7) mit einem Eingabegerät nach Anspruch 3, **dadurch gekennzeichnet, dass** der Sensor zur Bestimmung des Drehwinkels einen oder mehrere Schleifringe (5) mit einem Drehgeber (6) hat.

5. Mobiles Endgerät (7) mit einem Eingabegerät nach Anspruch 3, **dadurch gekennzeichnet, dass** der Sensor zur Bestimmung des Drehwinkels ein Impulsgeber ist.

6. Mobiles Endgerät (7) mit einem Eingabegerät nach Anspruch 3, **dadurch gekennzeichnet, dass** der Sensor zur Bestimmung des Drehwinkels ein Codierungsrad ist.

7. Mobiles Endgerät (7) mit einem Eingabegerät nach Anspruch 2, **dadurch gekennzeichnet, dass** der flexible Draht (1) an einem Ende fest angebracht ist.

8. Mobiles Endgerät (7) mit einem Eingabegerät nach einem der vorhergehenden Ansprüche, **dadurch gekennzeichnet, dass** der flexible Draht (1) ein Federdraht ist.

9. Mobiles Endgerät (7) mit einem Eingabegerät nach einem der vorhergehenden Ansprüche, **gekennzeichnet durch** mindestens eine Auswahltaste (4) an dem freien Ende des flexiblen Drahtes (1).

10. Mobiles Endgerät (7) mit einem Eingabegerät nach einem der vorhergehenden Ansprüche, **dadurch gekennzeichnet, dass** das Eingabegerät in ein Gehäuse einschiebbar ist.

11. Mobiles Endgerät (7) mit einem Eingabegerät nach einem der vorhergehenden Ansprüche für ein Mobiltelefon (7), **dadurch gekennzeichnet, dass** das Eingabegerät als Antenne ausgebildet ist.

## Claims

1. Mobile terminal (7) comprising an input device and a display unit, wherein the input device is designed to control and/or select objects on the display unit, wherein the display unit is configured as a virtual retina display, **characterized in that** the input device has a wire (1) and a bending sensor (2), wherein the bending sensor (2) is connected to the longitudinal edge of the flexible wire (1), **in that** the input device is of elongate configuration and is routed away from the mobile terminal (7), and **in that** the flexible wire (1) is rectangular and has a preferred bending direction.

2. Mobile terminal (7) comprising an input device according to Claim 1, **characterized in that** two bending sensors (2a, 2b) are connected to the longitudinal edges of the flexible wire (1) at a right angle in relation to one another and extend along their longitudinal axis parallel in relation to one another.

3. Mobile terminal (7) comprising an input device according to either of the preceding claims, **characterized in that** the flexible wire (1) is rotatably mounted at one end, and a sensor for determining the rotation angle of the flexible wire (1) is provided.

4. Mobile terminal (7) comprising an input device according to Claim 3, **characterized in that** the sensor for determining the rotation angle has one or more slip rings (5) with a rotary encoder (6).

5. Mobile terminal (7) comprising an input device according to Claim 3, **characterized in that** the sensor for determining the rotation angle is a pulse transmitter.

6. Mobile terminal (7) comprising an input device according to Claim 3, **characterized in that** the sensor for determining the rotation angle is an encoding wheel.

7. Mobile terminal (7) comprising an input device according to Claim 2, **characterized in that** the flexible wire (1) is fixedly mounted on one end.

8. Mobile terminal (7) comprising an input device according to one of the preceding claims, **characterized in that** the flexible wire (1) is a spring wire.

9. Mobile terminal (7) comprising an input device according to one of the preceding claims, **characterized by** at least one selector key (4) at the free end of the flexible wire (1).

10. Mobile terminal (7) comprising an input device according to one of the preceding claims, **characterized in that** the input device can be pushed into a housing.

11. Mobile terminal (7) comprising an input device according to one of the preceding claims for a mobile telephone (7), **characterized in that** the input device is in the form of an antenna.

## Revendications

1. Terminal mobile (7) doté d'un appareil d'introduction et d'une unité d'affichage, l'appareil d'introduction étant configuré pour commander et/ou sélectionner des objets sur l'unité d'affichage, l'unité d'affichage étant réalisée sous la forme d'un affichage rétinien virtuel,
**caractérisé en ce que**
l'appareil d'introduction présente un fil (1) et un capteur de flexion (2), le capteur de flexion (2) étant raccordé au bord longitudinal du fil flexible (1),
**en ce que** l'appareil d'introduction a une forme allongée et déborde du terminal mobile (7) et
**en ce que** le fil flexible (1) est rectangulaire et présente une direction préférentielle de flexion.

2. Terminal mobile (7) doté d'un appareil d'introduction selon la revendication 1, **caractérisé en ce que** deux capteurs de flexion (2a, 2b) sont raccordés perpendiculairement l'un à l'autre à des bords longitudinaux du fil flexible (1) et s'étendent parallèlement l'un à l'autre le long de leur axe longitudinal.

3. Terminal mobile (7) doté d'un appareil d'introduction selon l'une des revendications précédentes, **caractérisé en ce que** le fil flexible (1) est placé de manière à pouvoir tourner à une extrémité et **en ce qu'**un capteur de détermination de l'angle de rotation du fil flexible (1) est prévu.

4. Terminal mobile (7) doté d'un appareil d'introduction selon la revendication 3, **caractérisé en ce que** le capteur de détermination de l'angle de rotation possède une ou plusieurs bagues de frottement (5) dotées d'un capteur de rotation (6).

5. Terminal mobile (7) doté d'un appareil d'introduction selon la revendication 3, **caractérisé en ce que** le capteur de détermination de l'angle de rotation est un émetteur d'impulsion.

6. Terminal mobile (7) doté d'un appareil d'introduction selon la revendication 3, **caractérisé en ce que** le capteur de détermination de l'angle de rotation est une roue de codage.

7. Terminal mobile (7) doté d'un appareil d'introduction selon la revendication 2, **caractérisé en ce que** le fil flexible (1) est immobilisé à une extrémité.

8. Terminal mobile (7) doté d'un appareil d'introduction selon l'une des revendications précédentes, **caractérisé en ce que** le fil flexible (1) est un fil élastique.

9. Terminal mobile (7) doté d'un appareil d'introduction selon l'une des revendications précédentes, **caractérisé par** au moins une touche de sélection (4) prévue à l'extrémité libre du fil flexible (1).

10. Terminal mobile (7) doté d'un appareil d'introduction selon l'une des revendications précédentes, **caractérisé en ce que** l'appareil d'introduction peut être inséré dans un boîtier.

11. Terminal mobile (7) doté d'un appareil d'introduction selon l'une des revendications précédentes pour téléphone mobile (7), **caractérisé en ce que** l'appareil d'introduction est configuré comme antenne.
